# EUROPEAN PATENT APPLICATION

(11) **EP 4 810 337 A1**
(43) Date of publication of application: **23.09.2026**
(21) Application number: 25227247.1
(22) Date of filing: 24.12.2025
(51) Int. Cl.: B60W 30/06, B62D 15/02, G01C 21/34, G06V 20/58

(54) **PARKING METHOD AND APPARATUS OF INTELLIGENT DRIVING VEHICLE, MEDIUM, DEVICE AND VEHICLE**

(30) Priority: 18.03.2025 CN 202510317359
(71) Applicant: Momenta (Suzhou) Technology Co., Ltd., Suzhou City, Jiangsu 215100 (CN)
(72) Inventor: ZHANG, Jiaxu, Suzhou, 215100 (CN); SUN, Gang, Suzhou, 215100 (CN); TENG, Ting, Suzhou, 215100 (CN); WU, Cheng, Suzhou, 215100 (CN); WANG, Tengfei, Suzhou, 215100 (CN)
(74) Representative: Cleveland Scott York

(57) **Abstract**

The present disclosure provides a parking method and an apparatus for an intelligent driving vehicle, a medium, a device, and a vehicle, including: determining a drivable region after gridding and a target parking space; expanding a current node in the drivable region from a parking starting point of the vehicle to obtain at least one candidate sub-node; determining a target grid where the candidate sub-node is located, and determining whether to retain the candidate sub-node in the target grid according to a node association relationship and/or a basic cost magnitude relationship between the candidate sub-node and a node already included in the target grid; determining a heuristic cost of the candidate sub-node to be calculated according to a retention relationship between the candidate sub-node to be calculated and the target grid, an online heuristic term and an offline heuristic term of at least one candidate sub-node; inserting the candidate sub-node into a priority queue; and popping a node having the lowest node total cost from the priority queue as a new current node, expanding the new current node, obtaining a target parking planning path when reaching the target parking space, and performing parking according to the path.

## Description

### TECHNICAL FIELD

The present disclosure relates to the technical field of intelligent driving, and in particular, to a parking method and an apparatus for an intelligent driving vehicle, a medium, a device and a vehicle.

### BACKGROUND

Automatic parking function is an effective means for solving the problem of difficult in parking in narrow spaces. Parking path planning is a key point of automatic parking, and a basic requirement therefor is that a planned path is feasible and safe without collision.

A traditional parking path planning method generally adopts a heuristic search planning method. A heuristic search algorithm refers to searching in a state space, evaluating each searched position (hereinafter referred to as a sub-node) to obtain an optimal position, and then searching from this position until reaching a target. In a parking path planning scenario, a total cost of each sub-node may be taken as an evaluation value of the sub-node, and a sub-node having the lowest total cost may be taken as an optimal sub-node. The total cost includes a basic cost and a heuristic cost. The basic cost refers to an actual cost from a starting point to a current node, and the heuristic cost refers to an estimated cost from the current node to a target node.

In the related art, the heuristic cost is only evaluated based on an offset between a planned vehicle position and a road center line, which results in poor reliability of cost evaluation, thereby leading to the problem of low accuracy of the planned parking path.

### SUMMARY

The present disclosure provides a parking method and an apparatus for an intelligent driving vehicle, a medium, a device and a vehicle, which can improve the reliability of node cost estimation, and further improve the accuracy of a parking planning path.

The technical solutions are as follows.

In a first aspect, an embodiment of the present disclosure provides a parking method for an intelligent driving vehicle, including: determining a drivable region based on environment perception in front of a vehicle and after gridding, and a parkable target parking space; taking a parking starting point of the vehicle as an initial node, and starting from the initial node, expanding a current node in the drivable region using a heuristic search algorithm to obtain at least one candidate sub-node of the current node; for each of the at least one candidate sub-node, determining a target grid where the candidate sub-node is located, and determining whether to retain the candidate sub-node in the target grid corresponding to the candidate sub-node according to a node association relationship and/or a basic cost magnitude relationship between the candidate sub-node and a node already included in the target grid where the candidate sub-node is located; for each candidate sub-node whose heuristic cost is to be calculated, determining the heuristic cost of the candidate sub-node to be calculated according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node of the current node, the retention relationship being configured to indicate whether the candidate sub-node to be calculated is in the target grid, the offline heuristic term being a heuristic cost of each node generated by performing global search from the target parking space to the parking starting point using a fine search algorithm without considering an influence of an obstacle in a map, and the online heuristic term being a heuristic cost of each node generated by performing global search from the target parking space to the parking starting point using a standard search algorithm when considering an influence of an obstacle in a map; inserting at least one candidate sub-node of the current node into a priority queue, nodes in the priority queue being arranged in an ascending order of a total node cost, and a total cost of each node including a sum of a basic cost and the heuristic cost; and popping a node having a lowest total node cost from the priority queue as a new current node, continuing to expand the new current node until the target parking space is reached, obtaining a target parking planning path from the parking starting point of the vehicle to the target parking space of the vehicle, and performing parking according to the target parking planning path.

It can be learned from the above solution that, in the embodiments of the present disclosure, the drivable region after gridding and the parkable target parking space can be predetermined. After obtaining at least one candidate sub-node of the current node, whether to retain the candidate sub-node in the target grid corresponding to the candidate sub-node is determined according to the node association relationship and/or the basic cost magnitude relationship between each candidate sub-node and the node already included in the target grid where the candidate sub-node is located. Thus, when calculating the heuristic cost of each candidate sub-node, the heuristic cost of the candidate sub-node to be calculated is determined by combining the retention relationship between the candidate sub-node to be calculated and the target grid where the candidate sub-node to be calculated is located, the online heuristic term and the offline heuristic term of the candidate sub-node to be calculated, and the online heuristic terms and the offline heuristic term of the other candidate sub-node(s) of the current node. The online heuristic term is the heuristic cost calculated under the condition that the influence of the obstacle in the map is taken into consideration, and the offline heuristic term is the heuristic cost calculated under the condition that the influence of the obstacle in the map is not taken into consideration. Aa a result, compared with evaluating the heuristic cost of the candidate sub-node only by the offset between the planned vehicle position and a road center line, the embodiments of the present disclosure comprehensively consider the node association relationship and/or the basic cost magnitude relationship between the candidate sub-node to be calculated and the node already included in the target grid where where the candidate sub-node to be calculated is located, the online heuristic term and the offline heuristic term of the candidate sub-node to be calculated, and the online heuristic term and the offline heuristic term of the other candidate sub-node(s) of the current node, thereby improving the reliability of the heuristic cost and the accuracy of the parking planning path. In addition, the embodiments of the present disclosure can improve the efficiency of parking path planning by inserting the candidate sub-node into the priority queue to determine an optimal sub-node among the candidate sub-nodes as the new current node.

In a possible implementation, said for each candidate sub-node whose heuristic cost is to be calculated, determining the heuristic cost of the candidate sub-node to be calculated according to the retention relationship between the candidate sub-node to be calculated and the target grid where the candidate sub-node to be calculated is located, the online heuristic term and the offline heuristic term of the candidate sub-node to be calculated, and the online heuristic term and the offline heuristic term of the other candidate sub-node of the current node includes: for each candidate sub-node whose heuristic cost is to be calculated, when the online heuristic term of the candidate sub-node to be calculated retained in the target grid is valid, taking the online heuristic term of the candidate sub-node to be calculated as the heuristic cost of the candidate sub-node to be calculated; when the online heuristic term of the candidate sub-node to be calculated retained in the target grid is invalid and the offline heuristic term of the candidate sub-node to be calculated retained in the target grid is valid, or when an offline heuristic term corresponding to the candidate sub-node to be calculated not retained in the target grid is valid, determining the heuristic cost of the candidate sub-node to be calculated according to an online heuristic term having a maximum value among all valid online heuristic terms of all candidate sub-nodes of the current node and the offline heuristic term of the candidate sub-node to be calculated; and when both the online heuristic term and the offline heuristic term of the candidate sub-node to be calculated are invalid, determining the heuristic cost of the candidate sub-node to be calculated according to the online heuristic term having the maximum value among all valid online heuristic terms of all candidate sub-nodes of the current node and an offline heuristic term having a maximum value among all valid offline heuristic terms.

It can be learned from the above solution that, in the embodiments of the present disclosure, when the online heuristic term of the candidate sub-node to be calculated retained in the target grid is valid, the valid online heuristic term is directly used as the heuristic cost of the candidate sub-node to be calculated, so that the heuristic cost of the candidate sub-node that has a legal relationship with other node in the target grid fuses the influence of the obstacle, thereby ensuring the reliability of the heuristic cost of this type of candidate sub-node. When the online heuristic term of the candidate sub-node to be calculated retained in the target grid is invalid and the offline heuristic term is valid, or when the offline heuristic term corresponding to the candidate sub-node to be calculated not retained in the target grid is valid, the heuristic cost of the candidate sub-node to be calculated can be comprehensively determined in combination with the online heuristic term having the maximum value among all valid online heuristic terms of all candidate sub-nodes of the current node and the offline heuristic term of the candidate sub-node to be calculated. When both the online heuristic term and the offline heuristic term of the candidate sub-node to be calculated are invalid, the heuristic cost of the candidate sub-node to be calculated is comprehensively determined in combination with the online heuristic term having the maximum value among all valid online heuristic terms of all candidate sub-nodes of the current node and the offline heuristic term having the maximum value among all valid offline heuristic terms. As a result, on the basis of fusing the valid heuristic term of the candidate sub-node to be calculated as much as possible, the final heuristic cost is ensured to be fused with the cost generated by the influence of the obstacle, making the heuristic cost closer to the real cost, thereby further improving the reliability of the heuristic cost of the candidate sub-node.

In a possible implementation, said determining the heuristic cost of the candidate sub-node to be calculated according to the online heuristic term having the maximum value among all valid online heuristic terms of all candidate sub-nodes of the current node and the offline heuristic term of the candidate sub-node to be calculated includes: taking a sum of the online heuristic term having the maximum value among all valid online heuristic terms of all candidate sub-nodes of the current node and the offline heuristic term of the candidate sub-node to be calculated as the heuristic cost of the candidate sub-node to be calculated; and/or said determining the heuristic cost of the candidate sub-node to be calculated according to the online heuristic term having the maximum value among all valid online heuristic terms of all candidate sub-nodes of the current node and the offline heuristic term having the maximum value among all valid offline heuristic terms includes: taking a sum of the online heuristic term having the maximum value among all valid online heuristic terms of all candidate sub-nodes of the current node and the offline heuristic term having the maximum value among all valid offline heuristic terms as the heuristic cost of the candidate sub-node to be calculated.

In a possible implementation, said determining the drivable region based on environment perception in front of the vehicle and after gridding, and the parkable target parking space includes: determining an initial drivable region based on environment perception in front of the vehicle; dividing the initial drivable region into a Voronoi diagram; scanning each convex region in the Voronoi diagram using a scan line algorithm to obtain a distance between each point in each convex region and an obstacle point in the convex region; when gridding the initial drivable region, recording a distance from each point in each grid to an obstacle point in a convex region corresponding to the point, to obtain a drivable region after gridding; and for each idle parking space, performing collision detection on a planned vehicle position and the distance from each point in each grid to the obstacle point in the convex region corresponding to the point, to determine a parkable target parking space from the idle parking spaces

It can be learned from the above solution that, in the embodiments of the present disclosure, after obtaining the initial drivable region, the initial drivable region is first divided into the Voronoi diagram, and then each convex region in the Voronoi diagram is scanned using the scan line algorithm, so that the distance between a point in each convex region and an obstacle point in the convex region can be quickly obtained, thereby improving efficiency of determining attribute information of each grid when gridding the initial drivable region, and further improving efficiency of acquiring the target parking space.

In a possible implementation, said determining whether to retain the candidate sub-node in the target grid corresponding to the candidate sub-node according to the node association relationship and/or the basic cost magnitude relationship between the candidate sub-node and the node already included in the target grid where the candidate sub-node is located includes: when the target grid is empty, or when a parent-child relationship or a sibling relationship exists between the candidate sub-node and a node already included in the target grid, retaining the candidate sub-node in the target grid; and when neither a parent-child relationship nor a sibling relationship exists between the candidate sub-node and the node already included in the target grid, if a basic cost of the candidate sub-node is less than a basic cost of the target grid, retaining the candidate sub-node in the target grid, otherwise removing the candidate sub-node from the target grid, the basic cost of the target grid being a lowest basic cost among basic costs of all nodes retained in the target grid.

It can be learned from the above solution that, in the embodiments of the present disclosure, the legality determination of the candidate sub-node is implemented by determining the relationship between each candidate sub-node and the node in the target grid to which the candidate sub-node belongs and comparing the basic cost of the candidate sub-node with the basic cost of the target grid, and only the legal candidate sub-node can be retained in the target grid, while the illegal candidate sub-node is discarded. Further, when the candidate sub-node is retained in the target grid, the effective online heuristic term of the candidate sub-node can be directly taken as the heuristic cost of the candidate sub-node, thereby improving the accuracy of the heuristic cost of the legal candidate sub-node.

In a second aspect, an embodiment of the present disclosure provides a parking apparatus for an intelligent driving vehicle, including a first determination unit, an expansion unit, a second determination unit, a third determination unit, an insertion unit, a popping unit, and a parking unit. The first determination unit is configured to determine a drivable region based on environment perception in front of a vehicle and after gridding, and a parkable target parking space; the expansion unit is configured to take a parking starting point of the vehicle as an initial node, and starting from the initial node, expand a current node in the drivable region using a heuristic search algorithm to obtain at least one candidate sub-node of the current node; the second determination unit is configured to determine, for each of the at least one candidate sub-node, a target grid where the candidate sub-node is located, and determine whether to retain the candidate sub-node in the target grid corresponding to the candidate sub-node according to a node association relationship and/or a basic cost magnitude relationship between the candidate sub-node and a node already included in the target grid where the candidate sub-node is located; the third determination unit is configured to determine, for each candidate sub-node whose heuristic cost is to be calculated, the heuristic cost of the candidate sub-node to be calculated according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node of the current node, the retention relationship being configured to indicate whether the candidate sub-node to be calculated is in the target grid, the offline heuristic term being a heuristic cost of each node generated by performing global search from the target parking space to the parking starting point using a fine search algorithm without considering an influence of an obstacle in a map, and the online heuristic term being a heuristic cost of each node generated by performing global search from the target parking space to the parking starting point using a standard search algorithm when considering an influence of an obstacle in a map; the insertion unit is configured to insert at least one candidate sub-node of the current node into a priority queue, nodes in the priority queue being arranged in an ascending order of a total node cost, and a total cost of each node includes a sum of a basic cost and the heuristic cost; the popping unit is configured to pop a node having a lowest total node cost from the priority queue as a new current node, and return to the extension unit to continue to expand the new current node until the target parking space is reached, and obtain a target parking planning path from the parking starting point of the vehicle to the target parking space of the vehicle; and the parking unit is configured to park according to the target parking planning path.

In a possible implementation, the third determination unit includes a first determination module, a second determination module, and a third determination module. The first determination module is configured to: for each candidate sub-node whose heuristic cost is to be calculated, when the online heuristic term of the candidate sub-node to be calculated retained in the target grid is valid, take the online heuristic term of the candidate sub-node to be calculated as the heuristic cost of the candidate sub-node to be calculated. The second determination module is configured to: when the online heuristic term of the candidate sub-node to be calculated retained in the target grid is invalid and the offline heuristic term is valid, or when an offline heuristic term corresponding to the candidate sub-node to be calculated not retained in the target grid is valid, determine the heuristic cost of the candidate sub-node to be calculated according to an online heuristic term having a maximum value among all valid online heuristic terms of all candidate sub-nodes of the current node and the offline heuristic term of the candidate sub-node to be calculated. The third determination module is configured to: when both the online heuristic term and the offline heuristic term of the candidate sub-node to be calculated are invalid, determine the heuristic cost of the candidate sub-node to be calculated according to the online heuristic term having the maximum value among all valid online heuristic terms of all candidate sub-nodes of the current node and an offline heuristic term having a maximum value among all valid offline heuristic terms.

In a possible implementation, the second determination module is configured to take a sum of the online heuristic term having the maximum value among all valid online heuristic terms of all candidate sub-nodes of the current node and the offline heuristic term of the candidate sub-node to be calculated as the heuristic cost of the candidate sub-node to be calculated; and/or the third determination module is configured to take a sum of the online heuristic term having the maximum value among all valid online heuristic terms of all candidate sub-nodes of the current node and the offline heuristic term having the maximum value among all valid offline heuristic terms as the heuristic cost of the candidate sub-node to be calculated.

In a possible implementation, the first determination unit includes a fourth determination module, a division module, a scanning module, a recording module, and a detection module. The fourth determination module is configured to determine an initial drivable region based on environment perception in front of the vehicle. The division module is configured to divide the initial drivable region into a Voronoi diagram. The scanning module is configured to scan each convex region in the Voronoi diagram using a scan line algorithm to obtain a distance between each point in each convex region and an obstacle point in the convex region. The recording module is configured to, when gridding the initial drivable region, record a distance from each point in each grid to an obstacle point in a convex region corresponding to the point to obtain a drivable region after gridding. The detection module is configured to, for each idle parking space, perform collision detection on a planned vehicle position and the distance from each point in each grid to the obstacle point in the convex region corresponding to the point, so as to determine a parkable target parking space from the idle parking spaces.

In a possible implementation, the second determination unit is configured to: when the target grid is empty, or when a parent-child relationship or a sibling relationship exists between the candidate sub-node and a node already included in the target grid, retain the candidate sub-node in the target grid; and when neither a parent-child relationship nor a sibling relationship exists between the candidate sub-node and a node already included in the target grid, if a basic cost of the candidate sub-node is less than a basic cost of the target grid, retain the candidate sub-node in the target grid, otherwise remove the candidate sub-node from the target grid. The basic cost of the target grid is a lowest basic cost among basic costs of all nodes retained in the target grid.

It can be learned from the above solution that, in the embodiments of the present disclosure, the drivable region after gridding and the parkable target parking space can be predetermined. After obtaining at least one candidate sub-node of the current node, whether to retain the candidate sub-node in the target grid corresponding to the candidate sub-node is determined according to the node association relationship and/or the basic cost magnitude relationship between each candidate sub-node and the node already included in the target grid where the candidate sub-node is located. Thus, when calculating the heuristic cost of each candidate sub-node, the heuristic cost of the candidate sub-node to be calculated is determined by combining the retention relationship between the candidate sub-node to be calculated and the target grid where the candidate sub-node to be calculated is located, the online heuristic term and the offline heuristic term of the candidate sub-node to be calculated, and the online heuristic term and the offline heuristic term of the other candidate sub-node(s) of the current node. The online heuristic term is the heuristic cost calculated under the condition that an influence of an obstacle in a map is taken into consideration, and the offline heuristic term is the heuristic cost calculated under the condition that an influence of an obstacle in a map is not taken into consideration. Aa a result, compared with evaluating the heuristic cost of the candidate sub-node only by the offset between the planned vehicle position and a road center line, the embodiments of the present disclosure comprehensively consider the node association relationship and/or the basic cost magnitude relationship between the candidate sub-node to be calculated and the node already included in the target grid where the candidate sub-node to be calculated is located, the online heuristic term and the offline heuristic term of the candidate sub-node to be calculated, and the online heuristic term and the offline heuristic term of the other candidate sub-node(s) of the current node, thereby improving the reliability of the heuristic cost and the accuracy of the parking planning path. In addition, the embodiments of the present disclosure can improve the efficiency of parking path planning by inserting the candidate sub-node into the priority queue to determine an optimal sub-node among the candidate sub-nodes as the new current node.

In a third aspect, an embodiment of the present disclosure provides a parking system for an intelligent driving vehicle. The system includes a main thread, a parking space searching thread, a parking space releasing thread, and a path planning thread. The main thread is configured to call the parking space searching thread to plan a parking space searching trajectory when receiving a parking instruction, and call the parking space releasing thread at the same time, such that the parking space releasing thread determines a drivable region based on environment perception in front of a vehicle and after gridding, determines, according to the drivable region after gridding, whether a parking space obtained in a process in which the parking space searching thread plans the parking space searching trajectory has parkability, and outputs a parkable target parking space. The main thread is configured to, after the parking space releasing thread releases the target parking space, call the path planning thread to plan a target parking planning path from a parking starting point of the vehicle to the target parking space, and perform a parking operation according to the target parking planning path. The path planning thread is configured to take a parking starting point of the vehicle as an initial node, and starting from the initial node, expand a current node in the drivable region using a heuristic search algorithm to obtain at least one candidate sub-node of the current node; determine, for each of the at least one candidate sub-node, a target grid where the candidate sub-node is located, and determine whether to retain the candidate sub-node in the target grid corresponding to the candidate sub-node according to a node association relationship and/or a basic cost magnitude relationship between the candidate sub-node and a node already included in the target grid where the candidate sub-node is located; determine, for each candidate sub-node whose heuristic cost is to be calculated, the heuristic cost of the candidate sub-node to be calculated according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node of the current node, the retention relationship being configured to indicate whether the candidate sub-node to be calculated is in the target grid, the offline heuristic term being a heuristic cost of each node generated by performing global search from the target parking space to the parking starting point using a fine search algorithm without considering an influence of an obstacle in a map, and the online heuristic term being a heuristic cost of each node generated by performing global search from the target parking space to the parking starting point using a standard search algorithm when considering an influence of an obstacle in a map; insert at least one candidate sub-node of the current node into a priority queue, nodes in the priority queue being arranged in an ascending order of a total node cost, and a total cost of each node includes a sum of a basic cost and the heuristic cost; and pop a node having a lowest total node cost from the priority queue as a new current node, and continue to expand the new current node until the target parking space is reached, and obtain a target parking planning path from the parking starting point of the vehicle to the target parking space of the vehicle.

In a fourth aspect, an embodiment of the present disclosure provides a computer-readable storage medium on which a computer program is stored. The program, when executed by a processor, is configured to implement the method according to any one of the possible implementations of the first aspect.

In a fifth aspect, an embodiment of the present disclosure provides an electronic device, including: one or more processors. The processor is coupled to a storage apparatus that is configured to store one or more programs. The one or more programs, when executed by the one or more processors, is configured to cause the electronic device to implement the method according to any possible implementation of the first aspect.

In a sixth aspect, an embodiment of the present disclosure provides a vehicle, which includes the apparatus according to any one of the possible implementations of the second aspect, or includes the electronic device according to the fifth aspect.

In a seventh aspect, an embodiment of the present disclosure provides a computer program product, which includes instructions that, when running on a computer or a processor, cause the computer or the processor to implement the method according to any possible implementation of the first aspect.

### BRIEF DESCRIPTION OF DRAWINGS

To better illustrate embodiments of the present disclosure or the technical solutions in the related art, the drawings, which are intended to be used in the description of the embodiments or the related art, are briefly described as below. It is clear that the drawings in the following description are merely some embodiments of the present disclosure. For those skilled in the art, other drawings may be obtained according to these drawings without creative effort.
FIG. 1 is a schematic flowchart of a parking method for an intelligent driving vehicle according to an embodiment of the present disclosure;
FIG. 2 is an example diagram of a method for performing gridding based on a scan line algorithm according to an embodiment of the present disclosure;
FIG. 3 is a framework diagram of a parking system for an intelligent driving vehicle according to an embodiment of the present disclosure;
FIG. 4 is a block diagram of a composition of a parking apparatus for an intelligent driving vehicle according to an embodiment of the present disclosure; and
FIG. 5 is a schematic structural diagram of an electronic device or a computer device according to an embodiment of the present disclosure.

### DESCRIPTION OF EMBODIMENTS

Technical solutions in the embodiments of the present disclosure will be described below in combination with the drawings in the embodiments of the present disclosure. It should be noted that, the described embodiments are merely some but not all of the embodiments of the present disclosure. Based on the embodiments of the present disclosure, all other embodiments obtained by those ordinary skilled in the art without creative efforts shall fall within the protection scope of the present disclosure.

It should be noted that the embodiments of the present disclosure and features in the embodiments may be combined with each other without conflict. Terms "include" and "have" and any variations thereof in the embodiments and drawings of the present disclosure are intended to cover non-exclusive inclusion. For example, a process, a method, a system, a product, or a device containing a series of steps or units may not be limited to the listed steps or units, but also may optionally include steps or units that are not listed, or also may optionally include other steps or units inherent to the process, the method, the product, or the device.

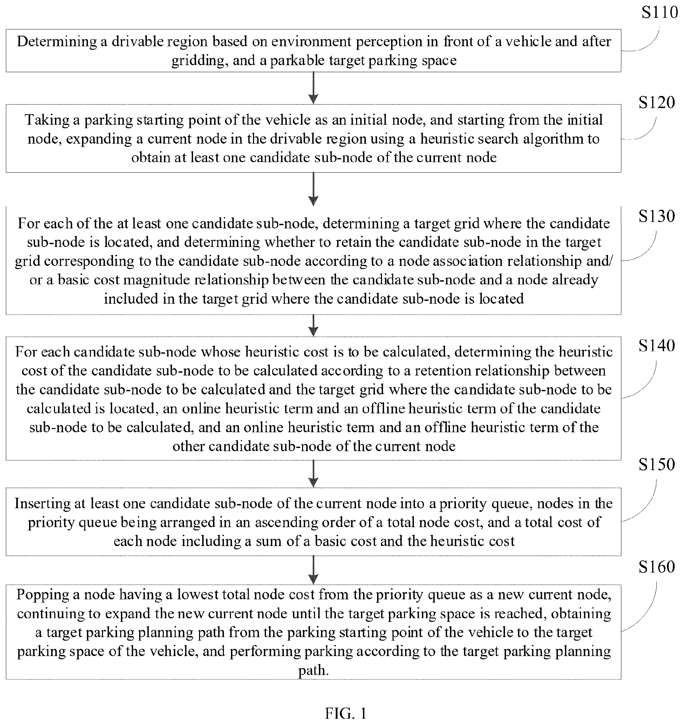

FIG. 1 is a schematic flowchart of a parking method for an intelligent driving vehicle. The method may be applied to an electronic device or a computer device, and may be specifically applied to a vehicle or a server. The method may include the following steps.

At S110, a drivable region based on environment perception in front of a vehicle and after gridding, and a parkable target parking space are determined.

After a driver turns on an automatic parking function or an assisted parking function, a main thread of a parking system may call a parking space searching thread to plan a parking space searching trajectory, and call a parking space releasing thread at the same time, so that the parking space releasing thread determines a drivable region based on environment perception in front of a vehicle and after gridding, determines, according to the drivable region after gridding, whether a parking space obtained in a process in which the parking space searching thread plans the parking space searching trajectory has parkability, and outputs the parkable target parking space.

In order to quickly obtain the target parking space, the parking space releasing thread may be configured to: first determine an initial drivable region perceived based on environment perception in front of the vehicle, divide the initial drivable region into a Voronoi diagram, scan each convex region in the Voronoi diagram using a scan line algorithm to obtain a distance between each point in each convex region and an obstacle point in the convex region, record a distance from each point in each grid to an obstacle point in a convex region corresponding to the point to obtain a drivable region after gridding when gridding the initial drivable region, and perform collision detection, for each idle parking space, on a planned vehicle position and the distance from each point in each grid to the obstacle point in the convex region corresponding to the point, so as to determine the parkable target parking space from the idle parking spaces.

Herein, Voronoi Diagram, also known as Thiessen Polygon, is a graphical method for dividing a space into a set of regions. Each region (i.e., convex region) is controlled by a specific point (seed point), so that each point is closest to the seed point that controls it. In other words, the Voronoi diagram divides the space into a set of polygons centered on the seed points, and points in each polygon are closest to a corresponding seed point.

In the embodiments of the present disclosure, the Voronoi diagram divides the space into different convex regions based on an obstacle point. A point in each convex region is closest to the obstacle point included in the convex region, and all the convex regions form a non-overlapping and gapless tessellation of the space.

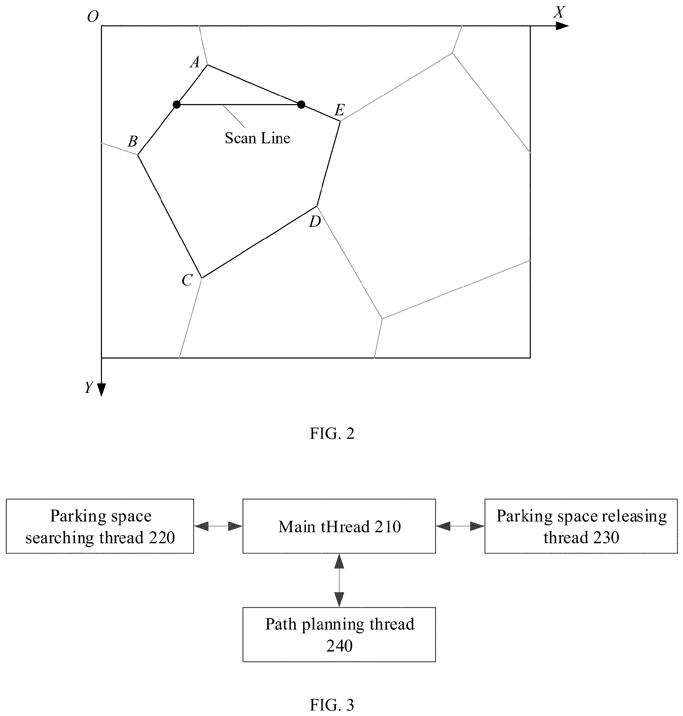

On the basis of the Voronoi diagram, each convex region is scanned from top to bottom using a scan line algorithm to obtain a distance between each point in each convex region and an obstacle point in the convex region, so as to grid the space. As shown in FIG. 2, the boundary of the convex region ABCD is represented in the form of a point set {A, B, C, D, E}, and the point set is arranged in a counterclockwise order. By traversing the point set, *Xₘᵢₙ = x_{B}, Xₘₐₓ = x_{E}, Yₘᵢₙ = y_{A},* and *Yₘₐₓ = y_{C}* are obtained. For the current *Yₘᵢₙ = y_{A},* abscissas of intersection points between a scan line and a boundary of the convex region are *X_{left} = x_{A}* and *X_{right} = x_{A}.* When the scan line moves by Δy along the y-axis, the counterclockwise arrangement characteristic of the point set is used to quickly locate the boundary of the convex region intersecting with the scan line, and the increments of the abscissas of the intersection points between the scan line and the boundary of the convex region are $Δ {X}_{left} = \frac{{x}_{A} - {x}_{B}}{{y}_{A} - {y}_{B}} ∗ Δ y$ and $Δ {X}_{right} = \frac{{x}_{A} - {x}_{E}}{{y}_{A} - {y}_{E}} ∗ Δy$.

Based on dimension data such as vehicle length, vehicle width, wheelbase, and wheel radius, an initial multi-circle model is generated according to fixed rules. A surveying and mapping data file and a multi-circle model file are read, and a vehicle body contour in the surveying and mapping data and a high model and a low model in the multi-circle model are drawn together. The multi-circle model file can be manually edited during script running, and the edited result is presented in real time. The position and size of each circle in the multi-circle model are manually adjusted to fit the vehicle body contour as much as possible.

After obtaining the multi-circle contour of the vehicle, for each idle parking space, collision detection is performed on the planned vehicle position and the distance from each point in each grid to the obstacle point in the convex region corresponding thereto, so as to determine the parkable target parking space from the idle parking spaces. The planned vehicle position includes the circle center of each circle in the multi-circle contour of the vehicle. When the circle center coincides with a certain point in a certain grid, the distance between the point and the obstacle point in the convex region corresponding thereto can be quickly determined, so that whether the vehicle collides with the obstacle point can be determined. When the distance is greater than the radius of the circle, no collision will occur. When the distance is less than or equal to the radius of the circle, a collision will occur.

At S120, a parking starting point of the vehicle is taken as an initial node, and starting from the initial node, the current node is expanded in the drivable region using a heuristic search algorithm to obtain at least one candidate sub-node of the current node.

After the parking space releasing thread obtains the target parking space, the main thread may call the path planning thread to start parking path planning. During initialization, the path planning thread loads vehicle model parameters, constructs an open list, a search node pool, and a node expansion mode, loads offline heuristic terms, sets the parking starting point and end point (a point on the target parking space), converts the parking starting point and end point from a global coordinate system to a parking space coordinate system, sets virtual limiters for the target parking space and nearby parking spaces to avoid front wheels rolling over the limiters, constructs online heuristic terms, and starts path search and planning after the initialization is completed.

The vehicle model parameters include: a front wheel steering angle, a front wheel rotation speed, wheelbase and the like. The offline heuristic term is the heuristic cost of each node generated by performing global search from the target parking space to the parking starting point using a fine search algorithm under the condition that the influence of obstacles in the map is not taken into consideration. The offline heuristic term does not take into consideration the influence of obstacles in the map, and has the characteristics of a wide map coverage area, fine granularity, and low real-time requirements for the construction process. The online heuristic term is the heuristic cost of each node generated by performing global search from the target parking space to the parking starting point using a standard search algorithm under the condition that the influence of obstacles in the map is taken into consideration. The online heuristic term includes the influence of the obstacles in the map, and has the characteristics of a small map coverage area, coarse granularity, and high real-time requirements for the construction process. The standard search algorithm includes a large-step-size A* algorithm and the like, and the fine search algorithm includes a small-step-size A* algorithm and the like.

At S130, for each of the at least one candidate sub-node, a target grid where the candidate sub-node is located is determined, and whether to retain the candidate sub-node in the target grid corresponding to the candidate sub-node is determined according to a node association relationship and/or a basic cost magnitude relationship between the candidate sub-node and a node already included in the target grid where the candidate sub-node is located.

When the target grid is empty, or when a parent-child relationship or a sibling relationship exists between the candidate sub-node and a node already included in the target grid, the candidate sub-node is retained in the target grid. When there is neither a parent-child relationship nor a sibling relationship between the candidate sub-node and the node already included in the target grid, if a basic cost of the candidate sub-node is less than a basic cost of the target grid, the candidate sub-node is retained in the target grid, otherwise the candidate sub-node is removed from the target grid.

The basic cost may be calculated based on factors such as a gear-shifting penalty, a steering penalty, an inter-node steering discontinuity penalty, a path length penalty, an obstacle distance penalty, an s-curve penalty, and a node position deviation penalty from the end point. The base cost of the target grid is the lowest base cost among the base costs of all nodes retained in the target grid.

According to the embodiments of the present disclosure, the legality determination of the candidate sub-node is implemented by determining the relationship between each candidate sub-node and the node in the target grid to which the candidate sub-node belongs and comparing the basic cost of the candidate sub-node with the basic cost of the target grid. Only the legal candidate sub-node can be retained in the target grid, and the illegal candidate sub-node is discarded. When the candidate sub-node is retained in the target grid, the effective online heuristic term of the candidate sub-node can be directly taken as the heuristic cost of the candidate sub-node, thereby improving the accuracy of the heuristic cost of the legal candidate sub-node.

At S140, for each candidate sub-node whose heuristic cost is to be calculated, the heuristic cost of the candidate sub-node to be calculated is determined according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node(s) of the current node.

The retention relationship is used to indicate whether the candidate sub-node to be calculated is in the target grid.

An exemplary method for determining the heuristic cost of each candidate sub-node to be calculated includes the following steps.

For each candidate sub-node whose heuristic cost is to be calculated, when the online heuristic term of the candidate sub-node to be calculated retained in the target grid is valid, the online heuristic term of the candidate sub-node to be calculated is taken as the heuristic cost of the candidate sub-node to be calculated.

When the online heuristic term of the candidate sub-node to be calculated retained in the target grid is invalid and the offline heuristic term of the candidate sub-node to be calculated retained in the target grid is valid, or when an offline heuristic term corresponding to the candidate sub-node to be calculated not retained in the target grid is valid, the heuristic cost of the candidate sub-node to be calculated is determined according to an online heuristic term having a maximum value among all valid online heuristic terms of all candidate sub-nodes of the current node and the offline heuristic term of the candidate sub-node to be calculated.

When both the online heuristic term and the offline heuristic term of the candidate sub-node to be calculated are invalid, the heuristic cost of the candidate sub-node to be calculated is determined according to the online heuristic term having the maximum value among all the valid online heuristic terms of all the candidate sub-nodes of the current node and an offline heuristic term having a maximum value among all valid offline heuristic terms.

An exemplary implementation method for determining the heuristic cost of the candidate sub-node to be calculated according to the online heuristic term having the maximum value among all valid online heuristic terms of all candidate sub-nodes of the current node and the offline heuristic term of the candidate sub-node to be calculated includes: a sum of the online heuristic term having the maximum value among all the valid online heuristic terms of all the candidate sub-nodes of the current node and the offline heuristic term of the candidate sub-node to be calculated being taken as the heuristic cost of the candidate sub-node to be calculated.

An exemplary implementation method for determining the heuristic cost of the candidate sub-node to be calculated according to the online heuristic term having the maximum value among all the valid online heuristic terms of all the candidate sub-nodes of the current node and an offline heuristic term having the maximum value among all valid offline heuristic terms includes: a sum of the online heuristic term having the maximum value among all the valid online heuristic terms of all the candidate sub-nodes of the current node and the offline heuristic term having the maximum value among all the valid offline heuristic terms being taken as the heuristic cost of the candidate sub-node to be calculated.

Whether the online heuristic term and the offline heuristic term are valid refers to: when calculating the heuristic term of each node in the initialization stage, whether the heuristic term meeting the preset requirements is calculated. If the heuristic term meeting the preset requirements can be calculated, the heuristic term is valid, otherwise, the heuristic term is invalid. The preset requirements may be determined according to the experience.

According to the embodiments of the present disclosure, when the online heuristic term of the candidate sub-node to be calculated retained in the target grid is valid, the valid online heuristic term is directly used as the heuristic cost of the candidate sub-node to be calculated, so that the heuristic cost of the candidate sub-node that has a legal relationship with other node in the target grid fuses the influence of the obstacle, thereby ensuring the reliability of the heuristic cost of this type of candidate sub-node. When the online heuristic term of the candidate sub-node to be calculated retained in the target grid is invalid and the offline heuristic term of the candidate sub-node to be calculated retained in the target grid is valid, or when the offline heuristic term corresponding to the candidate sub-node to be calculated not retained in the target grid is valid, the heuristic cost of the candidate sub-node to be calculated can be comprehensively determined in combination with the online heuristic term having the maximum value among all valid online heuristic terms of all candidate sub-nodes of the current node and the offline heuristic term of the candidate sub-node to be calculated. When both the online heuristic term and the offline heuristic term of the candidate sub-node to be calculated are invalid, the heuristic cost of the candidate sub-node to be calculated is comprehensively determined in combination with the online heuristic term having the maximum value among all valid online heuristic terms of all candidate sub-nodes of the current node and the offline heuristic term having the maximum value among all valid offline heuristic terms. As a result, on the basis of fusing the valid heuristic term of the candidate sub-node to be calculated as much as possible, the final heuristic cost is ensured to be fused with the cost generated by the influence of the obstacle, making the heuristic cost closer to the real cost, thereby further improving the reliability of the heuristic cost of the candidate sub-node.

At S150, the at least one candidate sub-node of the current node is inserted into a priority queue. Nodes in the priority queue are arranged in an ascending order of the total node cost, and a total cost of each node includes a sum of a basic cost and the heuristic cost.

After obtaining the basic cost and the heuristic cost of each candidate sub-node of the current node, the sum of the basic cost and the heuristic cost of each candidate sub-node may be calculated as the total node cost of the candidate sub-node, then the candidate sub-node of the current node and the node pre-stored in the priority queue are sorted according to the descending order of the total node cost, and the candidate sub-node of the current node is inserted into the priority queue.

At S160, a node having a lowest total node cost is popped from the priority queue as a new current node, the new current node is continued to expand until the target parking space is reached, a target parking planning path from the parking starting point of the vehicle to the target parking space of the vehicle is obtained, and parking is performed according to the target parking planning path.

The node having the lowest total node cost is popped from the priority queue as a new current node, and step S 120 is returned to for continuing to expand the new current node. Steps S130-S150 are continuously executed until the target parking space is reached. The target parking planning path from the parking starting point of the vehicle to the target parking space of the vehicle is obtained, and parking is performed according to the target parking planning path.

According to the parking method for the intelligent driving vehicle provided by the embodiments of the present disclosure, the drivable region after gridding and the parkable target parking space can be predetermined. After obtaining at least one candidate sub-node of the current node, whether to retain the candidate sub-node in the target grid corresponding to the candidate sub-node is determined according to the node association relationship and/or the basic cost magnitude relationship between each candidate sub-node and the node already included in the target grid where the candidate sub-node is located. Thus, when calculating the heuristic cost of each candidate sub-node, the heuristic cost of the candidate sub-node to be calculated is determined by combining the retention relationship between the candidate sub-node to be calculated and the target grid where the candidate sub-node to be calculated is located, the online heuristic term and the offline heuristic term of the candidate sub-node to be calculated, and the online heuristic term and the offline heuristic term of the other candidate sub-node(s) of the current node. The online heuristic term is the heuristic cost calculated under the condition that the influence of the obstacle in the map is taken into consideration, and the offline heuristic term is the heuristic cost calculated under the condition that the influence of the obstacle in the map is not taken into consideration. Aa a result, compared with evaluating the heuristic cost of the candidate sub-node only by the offset between the planned vehicle position and a road center line, the embodiments of the present disclosure comprehensively consider the node association relationship and/or the basic cost magnitude relationship between the candidate sub-node to be calculated and the node already included in the target grid where the candidate sub-node to be calculated is located, the online heuristic term and the offline heuristic term of the candidate sub-node to be calculated, and the online heuristic term and the offline heuristic term of the other candidate sub-node(s) of the current node, thereby improving the reliability of the heuristic cost and the accuracy of the parking planning path. In addition, the embodiments of the present disclosure can improve the efficiency of parking path planning by inserting the candidate sub-nodes into the priority queue to determine an optimal sub-node among the candidate sub-nodes as the new current node.

Based on the above method embodiments, another embodiment of the present disclosure provides a parking system for an intelligent driving vehicle. As shown in FIG. 3, the system includes a main thread 210, a parking space searching thread 220, a parking space releasing thread 230, and a path planning thread 240.

When receiving a parking instruction, the parking space searching thread 220 is called to plan a parking space searching trajectory, and the parking space releasing thread 230 is called at the same time, so that the parking space releasing thread 230 determines a drivable region that is perceived and gridded based on the environment perception in front of the vehicle, determines, according to the gridded drivable region, whether a parking space obtained in a possess in which the parking space searching thread 220 plans the parking space searching trajectory has parkability, and outputs a parkable target parking space.

After the parking space releasing thread 230 releases the target parking space, the main thread 210 calls the path planning thread 240 to plan a target parking planning path from the parking starting point of the vehicle to the target parking space, and performs a parking operation according to the target parking planning path.

The path planning thread 240 is configured to: take a parking starting point of the vehicle as an initial node, and starting from the initial node, expand a current node in the drivable region using a heuristic search algorithm to obtain at least one candidate sub-node of the current node; determine, for each of the at least one candidate sub-node, a target grid where the candidate sub-node is located, and determine whether to retain the candidate sub-node in the target grid corresponding to the candidate sub-node according to a node association relationship and/or a basic cost magnitude relationship between the candidate sub-node and a node already included in the target grid where the candidate sub-node is located; for each candidate sub-node whose heuristic cost is to be calculated, determine the heuristic cost of the candidate sub-node to be calculated according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node(s) of the current node, the retention relationship is configured to indicate whether the candidate sub-node to be calculated is in the target grid, the offline heuristic term is a heuristic cost of each node generated by performing global search from the target parking space to the parking starting point using a fine search algorithm without considering an influence of an obstacle in a map, and the online heuristic term is a heuristic cost of each node generated by performing global search from the target parking space to the parking starting point using a standard search algorithm when considering the influence of an obstacle in a map; insert at least one candidate sub-node of the current node into a priority queue, nodes in the priority queue are arranged in an ascending order of the total node cost, and a total cost of each node includes a sum of a basic cost and the heuristic cost; and pop a node having a lowest total node cost from the priority queue as a new current node, and continue to expand the new current node until the target parking space is reached, and obtain a target parking planning path from the parking starting point of the vehicle to the target parking space of the vehicle.

In the embodiments of the present disclosure, the parking space searching thread 220 may obtain the parking space searching trajectory using the scheme of "lateral pre-optimization + longitudinal pre-optimization + lateral optimization + longitudinal optimization + lateral and longitudinal integrated optimization". The lateral pre-optimization can adopt a cascade heuristic search algorithm to obtain a coarse parking space searching path. The lateral optimization takes the result of the lateral pre-optimization as a warm start and adopts a constrained iteration method to obtain a fine parking space searching path. The longitudinal pre-optimization calculates and outputs a coarse speed based on an s-v optimization model. The longitudinal optimization takes an output result of longitudinal pre-optimization as a reference constraint or an upper bound constraint, so that the fine speed meets the speed limit requirement. The lateral and longitudinal integrated optimization takes an output result of lateral optimization and longitudinal optimization as a warm start, and constructs and solves a constraint optimization problem to obtain the optimal parking space searching trajectory.

The s-v optimization model includes: $min \left(\begin{matrix}\frac{1}{2} {q}_{{{ν}_{lon}}^{2}} {\left({{ν}_{lon}}^{2}-{ν}_{lon , ref}^{2}\right)}^{2} + \frac{1}{2} {q}_{{a}_{lon}} {a}_{lon}^{2} + \frac{1}{2} {q}_{u} {u}^{2} + \frac{1}{2} {q}_{{ν}_{lon , sb}^{2}} {\left(max\left\{0,{{ν}_{lon}}^{2}-{ν}_{lon , sb}^{2}\right\}\right)}^{2} + \\ \frac{1}{2} {q}_{{a}_{lon , sb}} {\left(max\left\{0,\left|{a}_{lon}\right|-{a}_{lon , sb}\right\}\right)}^{2} + \frac{1}{2} {q}_{{u}_{sb}} {\left(max\left\{0,\left|u\right|-{u}_{sb}\right\}\right)}^{2}\end{matrix}\right) ,$ where ${q}_{{v}_{lon}^{2}}$, *q_{aₗₒₙ}, qᵤ,* ${q}_{{v}_{lon , sb}^{2}}$, *q_{alon,sb},* and *q_{u_{sb}}* respectively denote weight coefficients, *vₗₒₙ* denotes a longitudinal planning speed of the vehicle, *v_{lon,ref}* denotes a reference offset corresponding to the longitudinal planning speed of the vehicle, *aₗₒₙ* denotes a longitudinal planning acceleration of the vehicle, u denotes a planning control quantity taking a ratio of a longitudinal planning acceleration of the vehicle to the longitudinal planning speed of the vehicle, *v_{lon,sb}* denotes a target speed constraint, $max \left\{0,{v}_{lon}^{2}-{v}_{lon , sb}^{2}\right\}$ denotes a soft boundary constraint of the longitudinal planning speed of the vehicle, *a_{lon,sb}* denotes an upper bound of a soft boundary constraint of the longitudinal planning acceleration of the vehicle, a specific value thereof may be an empirical value or a value determined according to a derivative of the target speed constraint, and *max*{0, |*aₗₒₙ*| *- a_{lon,sb}*} denotes a soft boundary constraint of the longitudinal planning acceleration of the self-vehicle, *uₗₒₙ* denotes an upper bound of a soft boundary constraint of the planning control quantity, a specific value thereof may be an empirical value, and *max*{0, |*u*| *- u_{sb}*} denotes a soft boundary constraint of the planning control quantity.

The hard boundary constraint of the s-v optimization model includes a hard boundary constraint of the longitudinal planning speed of the vehicle and a hard boundary constraint of the longitudinal planning acceleration of the vehicle, which may specifically include: $\left\{\begin{matrix}{{ν}_{lon}}^{2} \leq {ν}_{lon , hb}^{2} \\ \left|{a}_{lon}\right| \leq {a}_{lon , hb}\end{matrix}\right. ,$ where *v_{lon,hb}* denotes an upper bound of the hard boundary constraint of the longitudinal planning speed of the vehicle, ${v}_{lon}^{2} \leq {v}_{lon , hb}$ denotes the hard boundary constraint of the longitudinal planning speed of the vehicle, *a_{lon,hb}* denotes an upper bound of the hard boundary constraint of the longitudinal planning acceleration of the vehicle, and |*aₗₒₙ*| ≤ *a_{lon,hb}* denotes the hard boundary constraint of the longitudinal planning acceleration of the vehicle.

The main thread 210 is a fast time period trigger thread for parking speed planning, state machine management and communication management. The state machine managed by the main thread 210 includes: a waiting state, a parking-in state, a parking-out state and a remote parking state. After parking is triggered, the system is switched from the waiting state to the parking-in state, the parking-out state and the remote parking state. After parking is completed, the system is switched from the parking-in state, the parking-out state and the remote parking state to the waiting state. In the waiting state, the main thread 210 calls the planning thread to perform early planning for the target parking space output by the parking space releasing thread 230. In the parking-in state, the parking-out state and the remote parking state, each state checks whether a feasible parking path has been planned. If the feasible parking path has been planned, a parking operation is executed. Otherwise, the path planning thread 240 is called to perform parking path planning.

The parking space searching thread 220, the parking space releasing thread 230 and the main thread 210 need to communicate with external modules within a specified time period, and are not allowed to be blocked. The path planning thread 240 takes a long time to run and is allowed to be preempted by a higher-priority threads during operation. Therefore, the parking space searching thread 220, the parking space releasing thread 230 and the main thread 210 may be set to have a same priority, which is higher than the priority of the path planning thread 240. The driver starts automatic parking with one key, the system calls the parking space searching thread 220 to plan the trajectory of the parking space searching stage. When the parking space releasing thread 230 running synchronously finds the target parking space, the path planning thread 240 is activated to plan the parking path, so as to realize seamless connection between the parking space searching trajectory and the parking trajectory, thereby realizing dynamic switching between parking space searching and parking operation without stopping the vehicle, improving the safety and consistency of parking, and significantly enhancing the convenience of a user.

According to the parking system for the intelligent driving vehicle provided by the embodiments of the present disclosure, the drivable region after gridding and the parkable target parking space can be predetermined. After obtaining at least one candidate sub-node of the current node, whether to retain the candidate sub-node in the target grid corresponding to the candidate sub-node is determined according to the node association relationship and/or the basic cost magnitude relationship between each candidate sub-node and the node already included in the target grid where the candidate sub-node is located. Thus, when calculating the heuristic cost of each candidate sub-node, the heuristic cost of the candidate sub-node to be calculated is determined by combining the retention relationship between the candidate sub-node to be calculated and the target grid where the candidate sub-node to be calculated is located, the online heuristic term and the offline heuristic term of the candidate sub-node to be calculated, and the online heuristic term and the offline heuristic term of the other candidate sub-node(s) of the current node. The online heuristic term is the heuristic cost calculated under the condition that the influence of an obstacle in a map is taken into consideration, and the offline heuristic term is the heuristic cost calculated under the condition that the influence of an obstacle in a map is not taken into consideration. Aa a result, compared with evaluating the heuristic cost of the candidate sub-node only by the offset between the planned vehicle position and a road center line, the embodiments of the present disclosure comprehensively consider the node association relationship and/or the basic cost magnitude relationship between the candidate sub-node to be calculated and the node already included in the target grid where the candidate sub-node to be calculated is located, the online heuristic term and the offline heuristic term of the candidate sub-node to be calculated, and the online heuristic term and the offline heuristic term of the other candidate sub-node(s) of the current node, thereby improving the reliability of the heuristic cost and the accuracy of the parking planning path. In addition, the embodiments of the present disclosure can improve the efficiency of parking path planning by inserting the candidate sub-node into the priority queue to determine an optimal sub-node among the candidate sub-nodes as the new current node.

In a possible implementation, the path planning thread 240 is configured to: for each candidate sub-node whose heuristic cost is to be calculated, when the online heuristic term of the candidate sub-node to be calculated retained in the target grid is valid, take the online heuristic term of the candidate sub-node to be calculated as the heuristic cost of the candidate sub-node to be calculated; when the online heuristic term of the candidate sub-node to be calculated retained in the target grid is invalid and the offline heuristic term is valid, or when an offline heuristic term corresponding to the candidate sub-node to be calculated not retained in the target grid is valid, determine the heuristic cost of the candidate sub-node to be calculated according to an online heuristic term having a maximum value among all valid online heuristic terms of all candidate sub-nodes of the current node and the offline heuristic term of the candidate sub-node to be calculated; and when both the online heuristic term and the offline heuristic term of the candidate sub-node to be calculated are invalid, determine the heuristic cost of the candidate sub-node to be calculated according to the online heuristic term having the maximum value among all the valid online heuristic terms of all the candidate sub-nodes of the current node and an offline heuristic term having a maximum value among all valid offline heuristic terms.

In a possible implementation, a sum of the online heuristic term having the maximum value among all the valid online heuristic terms of all the candidate sub-nodes of the current node and the offline heuristic term of the candidate sub-node to be calculated is taken as the heuristic cost of the candidate sub-node to be calculated.

And/or, a sum of the online heuristic term having the maximum value among all the valid online heuristic terms of all the candidate sub-nodes of the current node and the offline heuristic term having the maximum value among all the valid offline heuristic terms is taken as the heuristic cost of the candidate sub-node to be calculated.

In a possible implementation, when the target grid is empty, or when a parent-child relationship or a sibling relationship exists between the candidate sub-node and a node already included in the target grid, the candidate sub-node is retained in the target grid.

When there is neither the parent-child relationship nor the sibling relationship between the candidate sub-node and the node already included in the target grid, if a basic cost of the candidate sub-node is less than a basic cost of the target grid, the candidate sub-node is retained in the target grid, otherwise the candidate sub-node is removed from the target grid. The basic cost of the target grid is a lowest basic cost among basic costs of all nodes retained in the target grid.

In a possible implementation, the parking space releasing thread 230 is configured to: determine an initial drivable region based on the environment perception in front of the vehicle; divide the initial drivable region into a Voronoi diagram; scan each convex region in the Voronoi diagram using a scan line algorithm to obtain a distance between each point in each convex region and an obstacle point in the convex region; when gridding the initial drivable region, record a distance from each point in each grid to an obstacle point in a convex region corresponding to the point to obtain a drivable region after gridding; and for each idle parking space, perform collision detection on a planned vehicle position and the distance from each point in each grid to the obstacle point in the convex region corresponding to the point, so as to determine a parkable target parking space from the idle parking spaces.

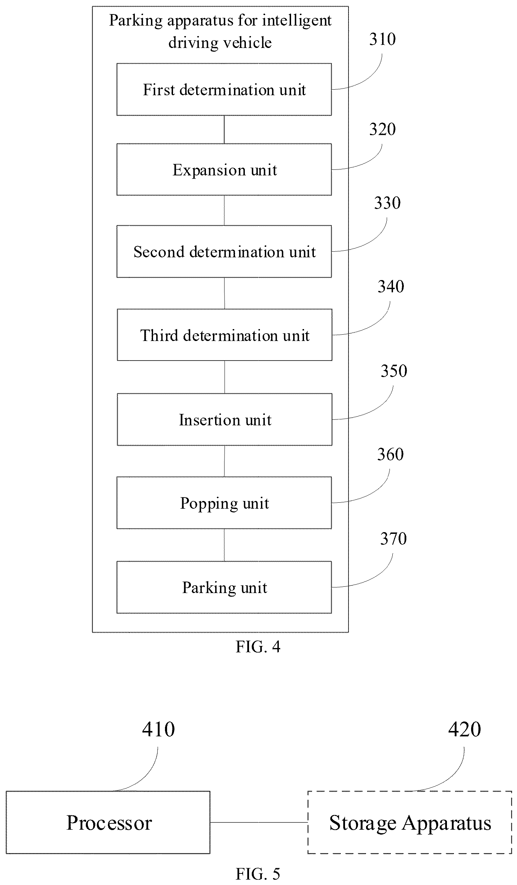

Based on the above method embodiments, another embodiment of the present disclosure provides a parking apparatus for an intelligent driving vehicle. As shown in FIG. 4, the apparatus includes a first determination unit 310, an expansion unit 320, a second determination unit 330, a third determination unit 340, an insertion unit 350, a popping unit 360, and a parking unit 370.

The first determination unit 310 is configured to determine a drivable region based on environment perception in front of a vehicle and after gridding, and a parkable target parking space.

The expansion unit 320 is configured to take a parking starting point of the vehicle as an initial node, and starting from the initial node, expand a current node in the drivable region using a heuristic search algorithm to obtain at least one candidate sub-node of the current node.

The second determination unit 330 is configured to determine, for each of the at least one candidate sub-node, a target grid where the candidate sub-node is located, and determine whether to retain the candidate sub-node in the target grid corresponding to the candidate sub-node according to a node association relationship and/or a basic cost magnitude relationship between the candidate sub-node and a node already included in the target grid where the candidate sub-node is located.

The third determination unit 340 is configured to determine, for each candidate sub-node whose heuristic cost is to be calculated, the heuristic cost of the candidate sub-node to be calculated according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node(s) of the current node. The retention relationship is configured to indicate whether the candidate sub-node to be calculated is in the target grid, the offline heuristic term is a heuristic cost of each node generated by performing global search from the target parking space to the parking starting point using a fine search algorithm without considering an influence of an obstacle in a map, and the online heuristic term is a heuristic cost of each node generated by performing global search from the target parking space to the parking starting point using a standard search algorithm when considering the influence of the obstacle in the map.

The insertion unit 350 is configured to insert at least one candidate sub-node of the current node into a priority queue. Nodes in the priority queue are arranged in an ascending order of the total node cost, and a total cost of each node includes a sum of a basic cost and the heuristic cost.

The popping unit 360 is configured to pop a node having a lowest total node cost from the priority queue as a new current node, and return to the extension unit to continue to expand the new current node until the target parking space is reached, and obtain a target parking planning path from the parking starting point of the vehicle to the target parking space of the vehicle.

The parking unit 370 is configured to park according to the target parking planning path.

In a possible implementation, the third determination unit 340 includes a first determination module, a second determination module, and a third determination module.

The first determination module is configured to: for each candidate sub-node whose heuristic cost is to be calculated, when the online heuristic term of the candidate sub-node to be calculated retained in the target grid is valid, take the online heuristic term of the candidate sub-node to be calculated as the heuristic cost of the candidate sub-node to be calculated.

The second determination module is configured to: when the online heuristic term of the candidate sub-node to be calculated retained in the target grid is invalid and the offline heuristic term is valid, or when an offline heuristic term corresponding to the candidate sub-node to be calculated not retained in the target grid is valid, determine the heuristic cost of the candidate sub-node to be calculated according to an online heuristic term having a maximum value among all valid online heuristic terms of all candidate sub-nodes of the current node and the offline heuristic term of the candidate sub-node to be calculated.

The third determination module is configured to: when both the online heuristic term and the offline heuristic term of the candidate sub-node to be calculated are invalid, determine the heuristic cost of the candidate sub-node to be calculated according to the online heuristic term having the maximum value among all the valid online heuristic terms of all the candidate sub-nodes of the current node and an offline heuristic term having a maximum value among all valid offline heuristic terms.

In a possible implementation, the second determination module is configured to take a sum of the online heuristic term having the maximum value among all the valid online heuristic terms of all the candidate sub-nodes of the current node and the offline heuristic term of the candidate sub-node to be calculated as the heuristic cost of the candidate sub-node to be calculated; and/or the third determination module is configured to take a sum of the online heuristic term having the maximum value among all the valid online heuristic terms of all the candidate sub-nodes of the current node and the offline heuristic term having the maximum value among all the valid offline heuristic terms as the heuristic cost of the candidate sub-node to be calculated.

In a possible implementation, the first determination unit 310 includes a fourth determination module, a division module, a scanning module, a recording module, and a detection module.

The fourth determination module is configured to determine an initial drivable region based on the environment perception in front of the vehicle.

The division module is configured to divide the initial drivable region into a Voronoi diagram.

The scanning module is configured to scan each convex region in the Voronoi diagram using a scan line algorithm to obtain a distance between each point in each convex region and an obstacle point in the convex region.

The recording module is configured to, when gridding the initial drivable region, record a distance from each point in each grid to an obstacle point in a convex region corresponding to the point to obtain a drivable region after gridding.

The detection module is configured to, for each idle parking space, perform collision detection on a planned vehicle position and the distance from each point in each grid to the obstacle point in the convex region corresponding to the point, so as to determine a parkable target parking space from the idle parking spaces.

In a possible implementation, the second determination unit 330 is configured to: when the target grid is empty, or when a parent-child relationship or a sibling relationship exists between the candidate sub-node and a node already included in the target grid, retain the candidate sub-node in the target grid; and when there is neither the parent-child relationship nor the sibling relationship between the candidate sub-node and the node already included in the target grid, if a basic cost of the candidate sub-node is less than a basic cost of the target grid, retain the candidate sub-node in the target grid, otherwise remove the candidate sub-node from the target grid. The basic cost of the target grid is a lowest basic cost among basic costs of all nodes retained in the target grid.

According to the parking apparatus for the intelligent driving vehicle provided by the embodiments of the present disclosure, the drivable region after gridding and the parkable target parking space can be predetermined. After obtaining at least one candidate sub-node of the current node, whether to retain the candidate sub-node in the target grid corresponding to the candidate sub-node is determined according to the node association relationship and/or the basic cost magnitude relationship between each candidate sub-node and the node already included in the target grid where the candidate sub-node is located. Thus, when calculating the heuristic cost of each candidate sub-node, the heuristic cost of the candidate sub-node to be calculated is determined by combining the retention relationship between the candidate sub-node to be calculated and the target grid where the candidate sub-node to be calculated is located, the online heuristic term and the offline heuristic term of the candidate sub-node to be calculated, and the online heuristic term and the offline heuristic term of the other candidate sub-node(s) of the current node. The online heuristic term is the heuristic cost calculated under the condition that the influence of obstacles in the map is taken into consideration, and the offline heuristic term is the heuristic cost calculated under the condition that the influence of the obstacle in the map is not taken into consideration. Aa a result, compared with evaluating the heuristic cost of the candidate sub-node only by the offset between the planned vehicle position and a road center line, the embodiments of the present disclosure comprehensively consider the node association relationship and/or the basic cost magnitude relationship between the candidate sub-node to be calculated and the node already included in the target grid where the candidate sub-node to be calculated is located, the online heuristic term and the offline heuristic term of the candidate sub-node to be calculated, and the online heuristic term and the offline heuristic term of the other candidate sub-node(s) of the current node, thereby improving the reliability of the heuristic cost and the accuracy of the parking planning path. In addition, the embodiments of the present disclosure can improve the efficiency of parking path planning by inserting the candidate sub-nodes into the priority queue to determine an optimal sub-node among the candidate sub-nodes as the new current node.

Based on the above method embodiments, another embodiment of the present disclosure provides a non-transitory computer-readable storage medium on which a computer program is stored. The program, when executed by a processor, is configured to implement the method according to any one of the above implementations.

Based on the above method embodiments, another embodiment of the present disclosure provides an electronic device or a computer device, as shown in FIG. 5, including: one or more processors 410.

The processor 410 is coupled to a storage apparatus 420 that is configured to store one or more programs.

The one or more programs, when executed by the one or more processors 410, are configured to cause the electronic device or the computer device to implement the method according to any one of the above implementations.

Based on the above method embodiments, another embodiment of the present disclosure provides a vehicle. The vehicle includes the apparatus according to any one of the above implementations, or includes the above electronic device.

Based on the above embodiments, another embodiment of the present disclosure provides a computer program product, which includes instructions that, when running on a computer or a processor, cause the computer or the processor to implement the method according to any one of the above implementations.

The apparatus embodiments correspond to the method embodiments and have the same technical effects as the method embodiments. For details, please refer to the method embodiments. The apparatus embodiments are obtained based on the method embodiments. Detailed descriptions may be referred to the corresponding method embodiments, which will not be repeated herein. Those skilled in the art can understand that the drawings are merely schematic diagrams of one embodiment, and modules or processes shown in the drawings are not necessarily essential for implementing the present disclosure.

Those skilled in the art can understand that modules in the apparatus of the embodiments may be distributed in the apparatus of the embodiments as described in the embodiments of the present disclosure, or may be located in one or more apparatuses different from the present embodiment with corresponding changes. The modules in the above embodiments of the present disclosure may be combined into one module, or can be further divided into a plurality of sub-modules.

As above, it should be noted that, the above embodiments are merely for illustrating the present disclosure but not intended to provide any limitation. Although the present disclosure has been described in detail with reference to the above-described embodiments, it should be understood by those skilled in the art that, it is still possible to modify the technical solutions described in the above embodiments or to equivalently replace some of the technical features therein, but these modifications or replacements do not cause the essence of corresponding technical solutions to depart from the scope and the spirt of the present disclosure.

## Claims

1. A parking method for an intelligent driving vehicle, comprising:
determining a drivable region based on environment perception in front of a vehicle and after gridding, and a parkable target parking space;
taking a parking starting point of the vehicle as an initial node, and starting from the initial node, expanding a current node in the drivable region using a heuristic search algorithm to obtain at least one candidate sub-node of the current node;
for each of the at least one candidate sub-node, determining a target grid where the candidate sub-node is located, and determining whether to retain the candidate sub-node in the target grid corresponding to the candidate sub-node according to a node association relationship and/or a basic cost magnitude relationship between the candidate sub-node and a node already comprised in the target grid where the candidate sub-node is located;
for each candidate sub-node whose heuristic cost is to be calculated, determining the heuristic cost of the candidate sub-node to be calculated according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node of the current node, wherein the retention relationship is configured to indicate whether the candidate sub-node to be calculated is in the target grid, the offline heuristic term is a heuristic cost of each node generated by performing global search from the target parking space to the parking starting point using a fine search algorithm without considering an influence of an obstacle in a map, and the online heuristic term is a heuristic cost of each node generated by performing global search from the target parking space to the parking starting point using a standard search algorithm when considering an influence of an obstacle in a map;
inserting at least one candidate sub-node of the current node into a priority queue, wherein nodes in the priority queue are arranged in an ascending order of a total node cost, and a total cost of each node comprises a sum of a basic cost and the heuristic cost; and
popping a node having a lowest total node cost from the priority queue as a new current node, continuing to expand the new current node until the target parking space is reached, obtaining a target parking planning path from the parking starting point of the vehicle to the target parking space of the vehicle, and performing parking according to the target parking planning path.

2. The method according to claim 1, wherein said for each candidate sub-node whose heuristic cost is to be calculated, determining the heuristic cost of the candidate sub-node to be calculated according to the retention relationship between the candidate sub-node to be calculated and the target grid where the candidate sub-node to be calculated is located, the online heuristic term and the offline heuristic term of the candidate sub-node to be calculated, and the online heuristic term and the offline heuristic term of the other candidate sub-node of the current node comprises:
for each candidate sub-node whose heuristic cost is to be calculated, when the online heuristic term of the candidate sub-node to be calculated retained in the target grid is valid, taking the online heuristic term of the candidate sub-node to be calculated as the heuristic cost of the candidate sub-node to be calculated;
when the online heuristic term of the candidate sub-node to be calculated retained in the target grid is invalid and the offline heuristic term of the candidate sub-node to be calculated retained in the target grid is valid, or when an offline heuristic term corresponding to the candidate sub-node to be calculated not retained in the target grid is valid, determining the heuristic cost of the candidate sub-node to be calculated according to an online heuristic term having a maximum value among all valid online heuristic terms of all candidate sub-nodes of the current node and the offline heuristic term of the candidate sub-node to be calculated; and
when both the online heuristic term and the offline heuristic term of the candidate sub-node to be calculated are invalid, determining the heuristic cost of the candidate sub-node to be calculated according to the online heuristic term having the maximum value among all valid online heuristic terms of all candidate sub-nodes of the current node and an offline heuristic term having a maximum value among all valid offline heuristic terms.

3. The method according to claim 2, wherein said determining the heuristic cost of the candidate sub-node to be calculated according to the online heuristic term having the maximum value among all valid online heuristic terms of all candidate sub-nodes of the current node and the offline heuristic term of the candidate sub-node to be calculated comprises: taking a sum of the online heuristic term having the maximum value among all valid online heuristic terms of all candidate sub-nodes of the current node and the offline heuristic term of the candidate sub-node to be calculated as the heuristic cost of the candidate sub-node to be calculated; and/or
said determining the heuristic cost of the candidate sub-node to be calculated according to the online heuristic term having the maximum value among all valid online heuristic terms of all candidate sub-nodes of the current node and the offline heuristic term having the maximum value among all valid offline heuristic terms comprises: taking a sum of the online heuristic term having the maximum value among all valid online heuristic terms of all candidate sub-nodes of the current node and the offline heuristic term having the maximum value among all valid offline heuristic terms as the heuristic cost of the candidate sub-node to be calculated.

4. The method according to claim 1, wherein said determining the drivable region based on environment perception in front of the vehicle and after gridding, and the parkable target parking space comprises:
determining an initial drivable region based on environment perception in front of the vehicle;
dividing the initial drivable region into a Voronoi diagram;
scanning each convex region in the Voronoi diagram using a scan line algorithm to obtain a distance between each point in each convex region and an obstacle point in the convex region;
when gridding the initial drivable region, recording a distance from each point in each grid to an obstacle point in a convex region corresponding to the point, to obtain a drivable region after gridding; and
for each idle parking space, performing collision detection on a planned vehicle position and the distance from each point in each grid to the obstacle point in the convex region corresponding to the point, to determine a parkable target parking space from the idle parking spaces.

5. The method according to any one of claims 1 to 4, wherein said determining whether to retain the candidate sub-node in the target grid corresponding to the candidate sub-node according to the node association relationship and/or the basic cost magnitude relationship between the candidate sub-node and the node already comprised in the target grid where the candidate sub-node is located comprises:
when the target grid is empty, or when a parent-child relationship or a sibling relationship exists between the candidate sub-node and a node already comprised in the target grid, retaining the candidate sub-node in the target grid; and
when neither a parent-child relationship nor a sibling relationship exists between the candidate sub-node and the node already comprised in the target grid, if a basic cost of the candidate sub-node is less than a basic cost of the target grid, retaining the candidate sub-node in the target grid, otherwise removing the candidate sub-node from the target grid, wherein the basic cost of the target grid is a lowest basic cost among basic costs of all nodes retained in the target grid.

6. A parking apparatus for an intelligent driving vehicle, comprising:
a first determination unit configured to determine a drivable region based on environment perception in front of a vehicle and after gridding, and a parkable target parking space;
an expansion unit configured to take a parking starting point of the vehicle as an initial node, and starting from the initial node, expand a current node in the drivable region using a heuristic search algorithm to obtain at least one candidate sub-node of the current node;
a second determination unit configured to determine, for each of the at least one candidate sub-node, a target grid where the candidate sub-node is located, and determine whether to retain the candidate sub-node in the target grid corresponding to the candidate sub-node according to a node association relationship and/or a basic cost magnitude relationship between the candidate sub-node and a node already comprised in the target grid where the candidate sub-node is located;
a third determination unit configured to determine, for each candidate sub-node whose heuristic cost is to be calculated, the heuristic cost of the candidate sub-node to be calculated according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node of the current node, wherein the retention relationship is configured to indicate whether the candidate sub-node to be calculated is in the target grid, the offline heuristic term is a heuristic cost of each node generated by performing global search from the target parking space to the parking starting point using a fine search algorithm without considering an influence of an obstacle in a map, and the online heuristic term is a heuristic cost of each node generated by performing global search from the target parking space to the parking starting point using a standard search algorithm when considering an influence of an obstacle in a map;
an insertion unit configured to insert at least one candidate sub-node of the current node into a priority queue, wherein nodes in the priority queue are arranged in an ascending order of a total node cost, and a total cost of each node comprises a sum of a basic cost and the heuristic cost;
a popping unit configured to pop a node having a lowest total node cost from the priority queue as a new current node, and return to the extension unit to continue to expand the new current node until the target parking space is reached, and obtain a target parking planning path from the parking starting point of the vehicle to the target parking space of the vehicle; and
a parking unit configured to park according to the target parking planning path.

7. A parking system for an intelligent driving vehicle, comprising a main thread, a parking space searching thread, a parking space releasing thread and a path planning thread,
wherein the main thread is configured to call the parking space searching thread to plan a parking space searching trajectory when receiving a parking instruction, and call the parking space releasing thread at the same time, such that the parking space releasing thread determines a drivable region based on environment perception in front of a vehicle and after gridding, determines, according to the drivable region after gridding, whether a parking space obtained in a process in which the parking space searching thread plans the parking space searching trajectory has parkability, and outputs a parkable target parking space,
the main thread is configured to, after the parking space releasing thread releases the target parking space, call the path planning thread to plan a target parking planning path from a parking starting point of the vehicle to the target parking space, and perform a parking operation according to the target parking planning path, and
the path planning thread is configured to take a parking starting point of the vehicle as an initial node, and starting from the initial node, expand a current node in the drivable region using a heuristic search algorithm to obtain at least one candidate sub-node of the current node; determine, for each of the at least one candidate sub-node, a target grid where the candidate sub-node is located, and determine whether to retain the candidate sub-node in the target grid corresponding to the candidate sub-node according to a node association relationship and/or a basic cost magnitude relationship between the candidate sub-node and a node already comprised in the target grid where the candidate sub-node is located; determine, for each candidate sub-node whose heuristic cost is to be calculated, the heuristic cost of the candidate sub-node to be calculated according to a retention relationship between the candidate sub-node to be calculated and the target grid where the candidate sub-node to be calculated is located, an online heuristic term and an offline heuristic term of the candidate sub-node to be calculated, and an online heuristic term and an offline heuristic term of the other candidate sub-node of the current node, wherein the retention relationship is configured to indicate whether the candidate sub-node to be calculated is in the target grid, the offline heuristic term is a heuristic cost of each node generated by performing global search from the target parking space to the parking starting point using a fine search algorithm without considering an influence of an obstacle in a map, and the online heuristic term is a heuristic cost of each node generated by performing global search from the target parking space to the parking starting point using a standard search algorithm when considering an influence of an obstacle in a map; insert at least one candidate sub-node of the current node into a priority queue, wherein nodes in the priority queue are arranged in an ascending order of a total node cost, and a total cost of each node comprises a sum of a basic cost and the heuristic cost; and pop a node having a lowest total node cost from the priority queue as a new current node, and continue to expand the new current node until the target parking space is reached, and obtain a target parking planning path from the parking starting point of the vehicle to the target parking space of the vehicle.

8. A computer-readable storage medium on which a computer program is stored, wherein the program, when executed by a processor, is configured to implement the method according to any one of claims 1 to 5.

9. An electronic device, comprising:
one or more processors,
a storage apparatus coupled to the one or more processors and configured store one or more programs; wherein the one or more programs, when executed by the one or more processors, are configured to cause the electronic device to implement the method according to any one of claims 1 to 5.

10. A vehicle, comprising the apparatus according to claim 6, or the electronic device according to claim 9.
